# EUROPÄISCHE PATENTANMELDUNG

(11) **EP 4 360 968 A1**
(43) Veröffentlichungstag der Anmeldung: **01.05.2024**
(21) Anmeldenummer: 23205192.0
(22) Anmeldetag: 23.10.2023
(51) Int. Cl.: B60T 7/22, B60T 8/1755, G01S 15/931

(54) **VERFAHREN ZUM DURCHFÜHREN EINES ZWEITEILIGEN NOTBREMSVORGANGES EINES FAHRENDEN FAHRZEUGES, SOWIE EIN ZUGEHÖRIGES SYSTEM UND FAHRZEUG**

(30) Priorität: 26.10.2022 DE 102022128351
(71) Anmelder: CARIAD SE, 38440 Wolfsburg (DE)
(72) Erfinder: Funke, Steffen, 71739 Oberriexingen (DE)
(74) Vertreter: Hofstetter, Schurack & Partner

(57) **Zusammenfassung**

Die Erfindung betrifft ein Verfahren und ein System 3 zum Durchführen eines Notbremsvorganges eines fahrenden Fahrzeuges 1, welches die körperlichen Belastungen für einen Insassen des Fahrzeuges 1 bei einem Notbremsvorgang reduziert. Das Verfahren umfasst die Schritte:
a) Bereitstellen einer Distanz (D) und einer Relativgeschwindigkeit (V) des Fahrzeuges (1) zu einem Objekt (2), mit welchem das Fahrzeug (1) potentiell kollidieren kann;
b) Automatisches Erzeugen eines ersten Bremssignals zum Bremsen des Fahrzeuges (1) mit einer ersten Bremsbeschleunigung (a1) in einem ersten Zeitintervall (T1), abhängig von der Distanz (D) und der Relativgeschwindigkeit (V);
c) Automatisches Erzeugen eines zweiten Bremssignals zum Bremsen des Fahrzeuges (1) mit einer zweiten Bremsbeschleunigung (a2) in einem, das erste Zeitintervall (T1) anschließenden, zweiten Zeitintervall (T2) am Ende des Notbremsvorganges, wobei die zweite Bremsbeschleunigung (a2) gegenüber der ersten Bremsbeschleunigung (a1) reduziert ist.

## Beschreibung

Die Erfindung betrifft ein Verfahren und ein System zum Durchführen eines Notbremsvorganges eines fahrenden Fahrzeuges, sowie ein zugehöriges Fahrzeug.

Ein Notbremsvorgang wird in der Regel eingesetzt, um einen Unfall des Fahrzeuges mit einem anderen Objekt zu vermeiden oder zumindest zu mildern. Die dabei auftretenden hohen Bremsbeschleunigungen des Fahrzeuges führen zu hohen körperlichen Belastungen eines Insassen im Fahrzeug, insbesondere im Nackenbereich.

Der Erfindung liegt die Aufgabe zugrunde, ein Verfahren, ein System, sowie ein Fahrzeug bereitzustellen, welches die körperlichen Belastungen für einen Insassen des Fahrzeuges bei einem Notbremsvorgang reduziert.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch einen ersten Aspekt der Erfindung ist ein Verfahren zum Durchführen eines Notbremsvorganges eines fahrenden Fahrzeuges bereitgestellt. Das Verfahren umfasst insbesondere die folgenden Schritte:
a) Bereitstellen eines Werts einer Distanz und eines Werts einer Relativgeschwindigkeit des Fahrzeuges zu einem Objekt, mit welchem das Fahrzeug potentiell kollidieren kann;
b) Automatisches Erzeugen eines ersten Bremssignals zum Bremsen des Fahrzeuges mit einer ersten Bremsbeschleunigung in einem ersten Zeitintervall, abhängig von der Distanz und der Relativgeschwindigkeit;
c) Automatisches Erzeugen eines zweiten Bremssignals zum Bremsen des Fahrzeuges mit einer zweiten Bremsbeschleunigung in einem, das erste Zeitintervall anschließenden, zweiten Zeitintervall am Ende des Notbremsvorganges, wobei die zweite Bremsbeschleunigung gegenüber der ersten Bremsbeschleunigung reduziert ist.

Durch die zumindest zwei Phasen des Notbremsvorganges kann die körperliche Belastung für einen Insassen des Fahrzeuges bei einem Notbremsvorgang deutlich reduziert werden. Gerade am Ende des Notbremsvorganges, bei welchem die Belastung für den Insassen, insbesondere im Nackenbereich, am größten ist, kann diese Belastung insbesondere durch die reduzierte, zweite Bremsbeschleunigung abgemildert werden. Insbesondere wird durch das Verfahren nicht mehr bis zum Stillstand mit der ersten, insbesondere maximalen Bremsbeschleunigung gebremst, sondern im Vergleich dazu zum Ende des Bremsvorgangs hin mit einer dazu reduzierten Bremsbeschleunigung, insbesondere bis zum Stillstand des Fahrzeugs gebremst.

Insbesondere kann ein "Kopfnicken" des Insassen, welches vor allem durch einen starken Bremsvorgang bis zu einem Stillstand des Fahrzeuges zwangsweise hervorgerufen wird, abgemildert werden. Der Insasse empfindet somit vorteilhaft einen Notbremsvorgang mit den vorgeschlagenen Schritten zumindest als angenehmer gegenüber einem starken Bremsvorgang bis zum Stillstand des Fahrzeuges. Des Weiteren können die Komponenten einer Bremsvorrichtung des Fahrzeuges geschont werden, sodass ein Verschleiß der Komponenten reduziert werden kann.

Der Notbremsvorgang, auch bezeichnet als Schutzbremsung oder Gefahrbremsung, kann insbesondere automatisch, also ohne ein Eingriff eines Fahrers oder eines Insassen des Fahrzeuges, durch das Fahrzeug, insbesondere durch ein entsprechendes System des Fahrzeuges, beispielsweise ein Advanced driver-assistance system (ADAS) durchgeführt bzw. initiiert werden. Vorzugsweise kann ein Notbremsvorgang automatisch durchgeführt werden, wenn eine potentielle Kollision des Fahrzeuges mit dem Objekt, beispielsweise ein weiteres Fahrzeug, ein Passant, ein stehendes Objekt wie ein Gebäude oder ein Baum, durch eine Erkennungsvorrichtung des Fahrzeuges erkannt wird. Beispielsweise kann ein Kollisionskriterium erfüllt sein, sodass die Erkennungsvorrichtung eine potentielle Kollision erkennen kann. Der Notbremsvorgang dient bevorzugt dazu, dass eine Kollision des Fahrzeuges mit dem Objekt vorzugsweise verhindert oder gegebenenfalls zumindest abgemildert wird.

Das erfindungsgemäße Verfahren kann zumindest teilweise computerimplementiert sein.

Im ersten Verfahrensschritt kann die Distanz des Fahrzeuges zu dem Objekt, sowie die Relativgeschwindigkeit des Fahrzeuges zu dem Objekt, mit welchem das Fahrzeug potentiell kollidieren kann, bereitgestellt werden, beispielsweise von einer Umfeldsensorvorrichtung. Insbesondere kann sich das Fahrzeug dabei in einer Vorwärtsrichtung oder in einer Rückwärtsrichtung bewegen. Insbesondere kann die Relativgeschwindigkeit aus einer zeitlichen Änderung der Distanz, die kontinuierlich bereitgestellt werden kann, berechnet werden. Vorzugsweise kann die Distanz durch eine oder mehrere Sensoreinheiten der Umfeldsensorvorrichtung, wie beispielsweise Ultraschall-Sensoren oder dergleichen, erfasst werden, und die Distanz, insbesondere als Sensordaten, einer Steuereinheit des Fahrzeuges bereitzustellen. Die Steuereinheit kann insbesondere eine Komponente des ADAS sein.

Insbesondere kann die Distanz und die Relativgeschwindigkeit während des gesamten Notbremsvorganges kontinuierlich bereitgestellt werden, sodass stets eine aktuelle Distanz und eine aktuelle Relativgeschwindigkeit quasi in Echtzeit bereitgestellt werden kann.

Vorzugsweise kann die Distanz und die Relativgeschwindigkeit derart früh und unter einem derart großen Distanz bereitgestellt werden, sodass eine potentielle Kollision des Fahrzeuges mit dem Objekt frühzeitig bei einer großen Distanz erkannt werden kann. Somit kann es vorteilhaft zeitlich ermöglicht werden, dass der zweiteilige Notbremsvorgang überhaupt erst durchgeführt werden kann.

Insbesondere kann aus der bereitgestellten Distanz und der Relativgeschwindigkeit zu dem Objekt bestimmt werden, ob eine Kollision des Fahrzeuges mit dem Objekt unmittelbar bevorsteht, insbesondere wenn keine unmittelbare Gegenreaktion, beispielsweise in Form eines Bremsens oder Ausweichens, erfolgt. Beispielsweise kann ein Kollisionskennwert oder eine Kollisionswahrscheinlichkeit bestimmt werden.

In einem weiteren Verfahrensschritt kann abhängig von der Distanz und der Relativgeschwindigkeit automatisch das ersten Bremssignal erzeugt werden. Insbesondere kann ein Startzeitpunkt des ersten Zeitintervalls bzw. des Notbremsvorganges und/oder eine Entfernung des Fahrzeuges zum Objekt abhängig von der Distanz und der Relativgeschwindigkeit bestimmt, vorzugsweise berechnet, werden, zu welchem das erste Bremssignal erzeugt wird. Beispielsweise kann das erste Bremssignal von dem Kollisionskennwert oder der Kollisionswahrscheinlichkeit abhängig sein. Mit anderen Worten kann das erste Bremssignal dann automatisch erzeugt werden, wenn ein Kollision des Fahrzeuges mit dem Objekt unmittelbar bevorsteht.

Der Startzeitpunkt des ersten Zeitintervalls kann darüber hinaus abhängig sein von einer Dimensionierung der Bremsvorrichtung, einem Gewicht des Fahrzeuges, einem Bremsdruck bzw. einer Bremskraft, einem Bremsenzustand, einer Bereifung und/oder einer Fahrbahnbeschaffenheit abhängig sein. Weitere Faktoren können ebenfalls Einfluss auf den Startzeitpunkt haben. Diese Faktoren können beispielsweise bekannt sein für den Startzeitpunkt des ersten Zeitintervalls berücksichtigt werden.

Beispielsweise kann das erste Bremssignal von einer Steuereinheit des Fahrzeuges, insbesondere des ADAS, automatisch ohne ein Eingreifen des Fahrers erzeugt werden. Das erste Bremssignal kann insbesondere dazu vorgesehen und geeignet sein, eine Bremsvorrichtung des Fahrzeuges zu steuern, wobei die Bremsvorrichtung abhängig von dem ersten Bremssignal das Fahrzeug mit der ersten Bremsbeschleunigung bremsen kann. Die Steuereinheit und die Bremsvorrichtung sind hierzu signaltechnisch miteinander verbunden. Insbesondere wird das Fahrzeug abhängig von dem ersten Bremssignal gebremst.

Das Fahrzeug wird insbesondere im ersten Zeitintervall mit der ersten Bremsbeschleunigung gebremst. Insbesondere wird in dem gesamten ersten Zeitintervall mit dieser ersten Bremsbeschleunigung gebremst. Die Länge bzw. ein Endzeitpunkt des ersten Zeitintervalls kann von einer Reihe von Faktoren abhängig sein, insbesondere von der Distanz und der Relativgeschwindigkeit, von dem Startzeitpunkt und/oder der ersten Bremsbeschleunigung. Die erste Bremsbeschleunigung ist insbesondere abhängig sein von dem ersten Bremssignal. Darüber hinaus kann die erste Bremsbeschleunigung von einer Dimensionierung der Bremsvorrichtung, einem Gewicht des Fahrzeuges, einem Bremsdruck bzw. einer Bremskraft, einem Bremsenzustand, einer Bereifung und/oder einer Fahrbahnbeschaffenheit abhängig sein. Weitere Faktoren können ebenfalls Einfluss auf die erste Bremsbeschleunigung haben. Diese Faktoren können beispielsweise bekannt sein und bei dem Erzeugen des ersten Bremssignals berücksichtigt werden.

Zu dem Endzeitpunkt des ersten Zeitintervalls weist das Fahrzeug vorzugsweise noch eine Restgeschwindigkeit auf, ist also noch nicht zu einem Stillstand gelangt. Insbesondere kann im ersten Zeitintervall ein Großteil der Relativgeschwindigkeit zu Beginn des Notbremsvorganges abgebaut werden, beispielsweise zwischen 80 % und 95 %.

In einem weiteren Verfahrensschritt kann automatisch das zweite Bremssignal im Anschluss an das erste Bremssignal erzeugt werden, welches insbesondere von der Distanz und der Relativgeschwindigkeit abhängig sein kann.

Beispielsweise kann das zweite Bremssignal von einer Steuereinheit des Fahrzeuges, insbesondere des ADAS, automatisch ohne ein Eingreifen des Fahrers erzeugt werden. Das zweite Bremssignal kann insbesondere dazu vorgesehen und geeignet sein, die Bremsvorrichtung des Fahrzeuges zu steuern, wobei die Bremsvorrichtung abhängig von dem zweiten Bremssignal das Fahrzeug mit der zweiten Bremsbeschleunigung bremsen kann. Insbesondere wird das Fahrzeug abhängig von dem zweiten Bremssignal gebremst.

Das Fahrzeug wird insbesondere im zweiten Zeitintervall mit der zweiten Bremsbeschleunigung gebremst. Die Länge bzw. ein Endzeitpunkt des zweiten Zeitintervalls kann von einer Reihe von Faktoren abhängig sein, insbesondere von der Distanz und der Relativgeschwindigkeit, von dem Startzeitpunkt der ersten Bremsbeschleunigung und/oder der zweiten Bremsbeschleunigung. Die zweite Bremsbeschleunigung ist insbesondere abhängig von dem zweiten Bremssignal. Darüber hinaus kann die zweite Bremsbeschleunigung von einer Dimensionierung der Bremsvorrichtung, einem Gewicht des Fahrzeuges, einem Bremsdruck bzw. einer Bremskraft, einem Bremsenzustand, einer Bereifung des Fahrzeuges und/oder einer Fahrbahnbeschaffenheit abhängig sein. Weitere Faktoren können ebenfalls Einfluss auf die erste Bremsbeschleunigung haben. Diese Faktoren können beispielsweise bekannt sein und bei dem Erzeugen des zweiten Bremssignals berücksichtigt werden.

Insbesondere ist die zweite Bremsbeschleunigung gegenüber der ersten Bremsbeschleunigung reduziert. Mit anderen Worten ist ein Betrag der zweiten Bremsbeschleunigung kleiner als ein Betrag der ersten Bremsbeschleunigung. Insbesondere kann ein Maximalbetrag der zweiten Bremsbeschleunigung kleiner sein als ein Minimalbetrag bzw. ein Mittelwert des Betrages der ersten Bremsbeschleunigung über dem ersten Zeitintervall.

Beispielsweise kann die erste Bremsbeschleunigung über das erste Zeitintervall und/oder die zweite Bremsbeschleunigung über das zweite Zeitintervall im Wesentlichen konstant sein. In diesem Zusammenhang kann unter "im Wesentlichen" auch verstanden werden, dass bei einer konstanten Bremsbeschleunigung ein gewisses Ruckeln der Bremsbeschleunigung, beispielsweise ausgelöst durch ein Antiblockiersystem (ABS) des Fahrzeuges, vorgesehen sein kann.

Beispielsweise kann der Endzeitpunkt des ersten Zeitintervall quasi einem Startzeitpunkt des zweiten Zeitintervalls entsprechen, sodass das zweite Zeitintervall dem ersten Zeitintervall direkt anschließt. Der Betrag der zweiten Bremsbeschleunigung am Startzeitpunkt des zweiten Zeitintervalls ist vorzugsweise gegenüber dem Betrag der ersten Bremsbeschleunigung am Endzeitpunkt des ersten Zeitintervalls reduziert, sodass quasi ein Sprung von der ersten Bremsbeschleunigung auf die zweite Bremsbeschleunigung erfolgt.

Das zweite Zeitintervall endet vorzugsweise bei einem Stillstand des Fahrzeuges, wobei das Fahrzeug vorzugsweise mit einem gewissen Abstand zum Objekt zum Stehen kommt. Der Abstand kann beispielsweise in einem Bereich von 5 cm bis 30 cm sein. Insbesondere kann im zweiten Zeitintervall ein restlicher Teil der Relativgeschwindigkeit abgebaut werden, beispielsweise zwischen 5 % und 20 %. Vorzugsweise ist das Fahrzeug mittels des Notbremsvorganges nicht mit dem Objekt kollidiert.

Ein Ausführungsbeispiel sieht vor, dass die erste Bremsbeschleunigung basierend auf dem ersten Bremssignal einer maximalen Bremsbeschleunigung des Fahrzeuges entspricht. Mit anderen Worten entspricht die maximale Bremsbeschleunigung einer Vollbremsung des Fahrzeuges. Insbesondere wird das Fahrzeug im ersten Zeitintervall mit der maximalen Bremsbeschleunigung des Fahrzeuges gebremst. Die maximale Bremsbeschleunigung kann von den bereits beschriebenen Faktoren abhängig sein.

Mittels der maximalen Bremsbeschleunigung kann die Relativgeschwindigkeit des Fahrzeuges im ersten Zeitintervall maximal reduziert werden. Dadurch kann eine Dauer des ersten Zeitintervalls reduziert werden. Dies hat den Vorteil, dass ein zurückgelegter Weg des Fahrzeuges während des ersten Zeitintervalls minimal ist, sodass noch ein ausreichende, restliche Distanz des Fahrzeuges für das Bremsen des Fahrzeuges mit der zweiten Bremsbeschleunigung im zweiten Zeitintervall bleibt.

Ein Ausführungsbeispiel sieht vor, dass die zweite Bremsbeschleunigung im zweiten Zeitintervall im Wesentlichen konstant ist.

Ein bevorzugtes Ausführungsbeispiel sieht vor, dass die zweite Bremsbeschleunigung basierend auf dem zweiten Bremssignal in dem zweiten Zeitintervall kontinuierlich reduziert wird. Insbesondere ist ein Betrag der zweiten Bremsbeschleunigung zum Startzeitpunkt des zweiten Zeitintervalls gegenüber der Bremsbeschleunigung zum Endzeitpunkt des ersten Zeitintervalls bereits reduziert. Der Betrag der zweiten Bremsbeschleunigung kann von dem Startzeitpunkt zu dem Endzeitpunkt des zweiten Zeitintervalls hin kontinuierlich abgebaut werden, insbesondere bis zu einem Betrag von 0. Die zweite Bremsbeschleunigung kann beispielsweise linear, asymptotisch oder stufenweise reduziert werden.

Mittels der kontinuierlichen Reduzierung der zweiten Bremsbeschleunigung kann ein abruptes Ende des Notbremsvorganges vermieden bzw. deutlich gemildert werden. Vielmehr kann vorteilhaft ein sanftes "Auslaufen" des Fahrzeuges bis zum Stillstand des Fahrzeuges gewährleistet werden. Insbesondere kann dadurch das unangenehme Kopfnicken bei einem abrupten Ende eines Notbremsvorganges bis zum Stillstand vermieden oder zumindest deutlich reduziert werden. Somit kann ein Komfort der Fahrzeuginsassen deutlich erhöht werden. Außerdem kann vorteilhaft ein Sicherheitsgefühl der Fahrzeuginsassen gesteigert werden. Des Weiteren können die Komponenten der Bremsvorrichtung des Fahrzeuges weiter geschont werden, sodass ein Verschleiß der Komponenten reduziert werden kann.

Ein Ausführungsbeispiel sieht vor, dass ein Übergangsbremssignal erzeugt wird, welche die erste Bremsbeschleunigung in die zweite Bremsbeschleunigung in einem Übergangszeitintervall zwischen dem ersten Zeitintervall und dem zweiten Zeitintervall kontinuierlich übergehen lässt. Insbesondere ist eine Dauer des Übergangszeitintervalls deutlich kleiner als die Dauer des ersten und/oder zweiten Zeitintervalls.

Insbesondere kann im Übergangszeitintervall die erste Bremsbeschleunigung auf die zweite Bremsbeschleunigung kontinuierlich, beispielsweise linear, reduziert werden. Dadurch kann ein Übergang sanfter erfolgen. Der Notbremsvorgang kann dadurch insgesamt durch den Fahrzeuginsassen als sanfter wahrgenommen werden, sodass dessen Komfort weiter gesteigert werden kann.

Ein Ausführungsbeispiel sieht vor, dass ein Startbremssignal zu Beginn des Notbremsvorganges erzeugt wird, welches die erste Bremsbeschleunigung kontinuierlich aufbauen lässt. Insbesondere ist eine Dauer für den Aufbau der ersten Bremsbeschleunigung deutlich kleiner als die Dauer des ersten und/oder zweiten Zeitintervalls. Insbesondere kann in einem Startintervall zu Beginn des Notbremsvorganges die erste Bremsbeschleunigung kontinuierlich, beispielsweise linear, aufgebaut werden, wobei das erste Zeitintervall direkt an das Startintervall anschließen kann. Somit kann eine Einleitung des Notbremsvorganges durch einen Insassen als sanft wahrgenommen werden, sodass ein Komfort gesteigert werden kann.

In einem bevorzugten Ausführungsbeispiel schließt das zweite Zeitintervall direkt an das Übergangszeitintervall an. Durch das Übergangszeitintervall und das zweite Zeitintervall wird in Summe ein Endzeitintervall gebildet, das den Endabschnitt der gesamten Zeitdauer des Notbremsvorgangs bilden. Insbesondere ist dieses Endzeitintervall kürzer, als das erste Zeitintervall. Insbesondere ist das Übergangszeitintervall kürzer als das zweite Zeitintervall. Insbesondere ist die erste Bremsbeschleunigung zumindest um den Faktor 2, insbesondere zumindest um den Faktor 3, größer als die zweite Bremsbeschleunigung. Vorzugsweise ist das Endzeitintervall kürzer als die Hälfte der gesamten Zeitdauer des Notbremsvorgangs.

Durch das Szenario während dem Endzeitintervall wird auch ein diskreter Sprung von einem stärkeren Reduzieren der Bremsbeschleunigung während dem Übergangszeitintervall zu einem im Vergleich dazu schwächeren Reduzieren der Bremsbeschleunigung in dem zweiten Zeitintervall vollzogen.

Ein Ausführungsbeispiel sieht vor, dass das erfindungsgemäße Verfahren lediglich in einem Parkmodus des Fahrzeuges zum Einparken und/oder Ausparken des Fahrzeuges und/oder in einem Langsamfahrmodus aktiviert ist. Somit kann gewährleistet sein, dass das erfindungsgemäße Verfahren lediglich in dem Parkmodus und/oder in einem Langsamfahrmodus durchgeführt werden kann. Insbesondere kann das Verfahrens deaktiviert sein, wenn das Fahrzeug sich nicht in einem Parkmodus und/oder Langsamfahrmodus befindet. Beispielsweise kann der Parkmodus und/oder Langsamfahrmodus des Fahrzeuges manuell durch einen Insassen oder automatisch durch eine Komponente des ADAS aktiviert bzw. zugeschaltet werden. Eine automatische Aktivierung des Parkmodus und/oder des Langsamfahrmodus kann beispielsweise ausgelöst werden durch einen Startvorgang des Fahrzeuges, das Einlegen eines Rückwärtsganges, ein Fahren des Fahrzeuges unterhalb einer vorgegebenen Geschwindigkeit oder dergleichen. Bevorzugt fährt das Fahrzeug mit einer Geschwindigkeit von weniger als 20 km/h, insbesondere weniger als 10 km/h. Es ist jedoch vorstellbar, dass das Verfahren in weiteren Fahrmodi bzw. in anderen Fahrfunktionen anwendbar ist.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessorschaltung der Prozessoreinrichtung kann z.B. zumindest eine Schaltungsplatine und/oder zumindest ein SoC (System on Chip) aufweisen.

Durch einen weiteren Aspekt der Erfindung ist ein System zum Durchführen eines Notbremsvorganges eines fahrenden Fahrzeuges bereitgestellt. Das System umfasst insbesondere eine Umfeldsensorvorrichtung, welche dazu ausgebildet ist, eine Distanz und eine Relativgeschwindigkeit des Fahrzeuges zu einem Objekt im Umfeld des Fahrzeuges bereitzustellen, mit welchem das Fahrzeug potentiell kollidieren kann. Das System umfasst weiter insbesondere eine Steuereinheit. Die Steuereinheit ist insbesondere dazu ausgebildet, abhängig von der Distanz und der Relativgeschwindigkeit ein erstes Bremssignal zum Bremsen des Fahrzeuges mit einer ersten Bremsbeschleunigung in einem ersten Zeitintervall automatisch zu erzeugen. Die Steuereinheit ist weiter insbesondere dazu ausgebildet, ein zweites Bremssignal zum Bremsen des Fahrzeuges mit einer zweiten Bremsbeschleunigung in einem, das erste Zeitintervall anschließenden, zweiten Zeitintervall am Ende des Notbremsvorganges automatisch zu erzeugen, wobei die zweite Bremsbeschleunigung gegenüber der ersten Bremsbeschleunigung reduziert ist.

Durch die zumindest zwei Phasen des Notbremsvorganges, die das System ausführen kann, kann die körperliche Belastung für einen Insassen des Fahrzeuges bei einem Notbremsvorgang deutlich reduziert werden. Gerade am Ende des Notbremsvorganges, bei welchem die Belastung für den Insassen, insbesondere im Nackenbereich, am größten ist, kann diese Belastung insbesondere durch die reduzierte, zweite Bremsbeschleunigung abgemildert werden. Insbesondere kann ein "Kopfnicken" des Insassen, welches vor allem durch einen starken Bremsvorgang bis zu einem Stillstand des Fahrzeuges zwangsweise hervorgerufen wird, abgemildert werden. Der Insasse empfindet somit vorteilhaft einen Notbremsvorgang mit den vorgeschlagenen Schritten zumindest als angenehmer gegenüber einem starken Bremsvorgang bis zum Stillstand des Fahrzeuges. Des Weiteren können die Komponenten einer Bremsvorrichtung des Fahrzeuges geschont werden, sodass ein Verschleiß der Komponenten reduziert werden kann.

Das System kann insbesondere ein elektronisches Fahrassistenzsystem oder ein elektronisches Fahrzeugführungssystem sein. Unter einem elektronischen Fahrzeugführungssystem kann ein elektronisches System verstanden werden, das dazu eingerichtet ist, ein Fahrzeug vollautomatisch oder vollautonom zu führen, insbesondere ohne dass ein Eingriff in eine Steuerung durch einen Fahrer erforderlich ist. Das Fahrzeug führt alle erforderlichen Funktionen, wie Lenk-, Brems- und/oder Beschleunigungsmanöver, die Beobachtung und Erfassung des Straßenverkehrs sowie entsprechende Reaktionen automatisch durch. Insbesondere kann das elektronische Fahrzeugführungssystem einen vollautomatischen oder vollautonomen Fahrmodus des Kraftfahrzeugs nach Stufe 5 der Klassifizierung gemäß SAE J3016 implementieren. Unter einem elektronischen Fahrzeugführungssystem kann auch ein Fahrerassistenzsystem (englisch: "advanced driver assistance system", ADAS) verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß der SAE J3016-Klassifizierung implementieren. Hier und im Folgenden bezieht sich "SAE J3016" auf die entsprechende Norm in der Version vom Juni 2018.

Insbesondere ist das erfindungsgemäße System dazu ausgebildet, dass erfindungsgemäße Verfahren durchzuführen.

Eine Umfeldsensorvorrichtung kann beispielsweise als Sensorsystem verstanden werden, das dazu in der Lage ist, Sensordaten oder Sensorsignale zu erzeugen, welche eine Umgebung der Umfeldsensorvorrichtung abbilden, darstellen oder wiedergeben. Insbesondere ist die Fähigkeit, elektromagnetische, akustische oder sonstige Signale aus der Umgebung zu erfassen, nicht hinreichend, um ein Sensorsystem als Umfeldsensorsystem zu erachten. Beispielsweise können Kameras, Radarsysteme, Lidarsysteme oder Ultraschallsensorsysteme als Umfeldsensorsysteme aufgefasst werden.

Die Steuereinheit kann eine oder mehrere Prozessoreinheiten, wie beispielsweise Mikrocontroller, feldprogrammierbare Gate-Arrays, FPGAs, oder sonstige integrierte Schaltkreise beinhalten.

Ein Ausführungsbeispiel des Systems sieht vor, dass die Umfeldsensorvorrichtung zumindest einen Ultraschall-Sensor umfasst, welcher dazu ausgebildet ist, die Distanz und die Relativgeschwindigkeit des Fahrzeuges zu dem Objekt zu erfassen. Mit Ultraschall-Sensoren können Objekte, wie große Hindernisse wie zum Beispiel Autos, Lastwagen, Wände etc., frühzeitig erkannt werden. Diese frühzeitige Erkennung gewährleistet, dass ausreichend Zeit zur Verfügung steht, um das zweiteilige, erfindungsgemäße Verfahren noch durchführen zu können. Ultraschall-Sensoren lassen sich vorteilhaft einfach und effektiv anwenden und in das Fahrzeug integrieren, ohne dass diese aufwendig vermessen und justiert werden müssen. Zudem sind Ultraschall-Sensoren in heutigen Fahrzeugmodellen weit verbreitet, sodass das System in ein bereits vorhandenes Fahrzeug einfach nachgerüstet werden kann. Zudem kann das System vorteilhaft auf eine aufwendige Sensorik, wie Kameras, Radar- oder Lidarsensoren verzichten und dennoch dazu ausgebildet sein, die angegebenen Schritte durchzuführen.

Ein Ausführungsbeispiel des Systems sieht vor, dass das System lediglich in einem Parkmodus des Fahrzeuges zum Einparken und/oder Ausparken des Fahrzeuges aktiviert ist. Insbesondere können dadurch wertvolle Ressourcen wie elektrische Energie und/oder Rechenleistung eingespart werden, wenn das System deaktiviert ist. Alternativ kann das System auch in weiteren Modi aktiviert oder stets aktiviert sein. Insbesondere ist es vorstellbar, dass das System durch den Fahrer des Fahrzeuges manuell aktiviert oder deaktiviert werden kann.

Zu der Erfindung gehören auch Weiterbildungen des erfindungsgemäßen Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems hier nicht noch einmal beschrieben.

Durch einen weiteren Aspekt der Erfindung ist ein Fahrzeug bereitgestellt, welches das erfindungsgemäßes System zur Durchführung des erfindungsgemäßen Verfahrens umfasst.

Zu der Erfindung gehören auch Weiterbildungen des erfindungsgemäßen Fahrzeuges, die Merkmale aufweisen, wie sie bereits im Zusammenhang mit den Weiterbildungen des erfindungsgemäßen Systems und/oder Verfahrens beschrieben worden sind. Aus diesem Grund sind die entsprechenden Weiterbildungen des erfindungsgemäßen Fahrzeuges hier nicht noch einmal beschrieben.

Das erfindungsgemäße Fahrzeug, insbesondere Kraftfahrzeug, ist bevorzugt als Kraftwagen, insbesondere als Personenkraftwagen oder Lastkraftwagen, oder als Personenbus oder Motorrad ausgestaltet.

Als eine weitere Lösung umfasst die Erfindung auch ein computerlesbares Speichermedium, umfassend Programmcode, der bei der Ausführung durch eine Prozessorschaltung eines Computers oder eines Computerverbunds diese veranlasst, eine Ausführungsform des erfindungsgemäßen Verfahrens auszuführen. Das Speichermedium kann z.B. zumindest teilweise als ein nichtflüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in der Prozessorschaltung in deren Datenspeicher angeordnet sein. Das Speichermedium kann aber auch beispielsweise als sogenannter Appstore-Server im Internet betrieben sein. Durch den Computer oder Computerverbund kann eine Prozessorschaltung mit zumindest einem Mikroprozessor bereitgestellt sein. Der Programmcode können als Binärcode oder Assembler und/oder als Quellcode einer Programmiersprache (z.B. C) und/oder als Programmskript (z.B. Python) bereitgestellt sein.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein Ablaufdiagramm eines Ausführungsbeispiels eines erfindungsgemäßen Verfahrens;
- Fig. 2: eine schematische Darstellung eines Ausführungsbeispiels eines erfindungsgemäßen Fahrzeuges mit einem erfindungsgemäßen System und einem Objekt;
- Fig. 3: ein Ausführungsbeispiel eines Zeit-Beschleunigungs-Diagramms eines erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

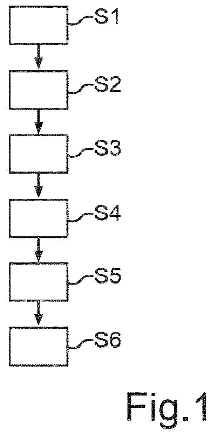

Fig. 1 zeigt ein Ablaufdiagramm eines Ausführungsbeispiels eines erfindungsgemäßen Verfahrens. In einem ersten Schritt S1 kann eine Distanz D eines fahrenden Fahrzeuges 1 zu einem Objekt 2, beispielsweise eine Wand, mittels einer Umfeldsensorvorrichtung 4 des Fahrzeuges erfasst und aus der kontinuierlich erfassten Distanz D eine Relativgeschwindigkeit V des Fahrzeuges 1 zu dem Objekt 2 berechnet werden, beispielsweise durch eine Recheneinheit des Fahrzeuges 1. Diese Daten D, V können im ersten Schritt 1 für die darauffolgenden Verfahrensschritte S2-S6 bereitgestellt werden.

In einem optionalen zweiten Schritt S2 kann beispielsweise mittels einer Recheneinheit bestimmt werden, ob das Fahrzeug 1 potentiell mit dem Objekt 2 kollidiert, insbesondere wenn die Relativgeschwindigkeit bis zu einem spätmöglichsten Zeitpunkt nicht deutlich reduziert wird. Beispielsweise kann die Recheneinheit einen Kollisionskennwert oder dergleichen bereitstellen.

In einem optionalen dritten Schritt S3 kann beispielsweise ein Startbremssignal zu Beginn des Notbremsvorganges erzeugt werden, welches die erste Bremsbeschleunigung (a1) während eines Startzeitintervalls T0 kontinuierlich aufbauen lässt.

In einem vierten Schritt S4 kann mittels einer Steuereinheit 5 eines Systems 3 des Fahrzeuges 1 abhängig von der Distanz D und der Relativgeschwindigkeit V ein erstes Bremssignal zum Bremsen des Fahrzeuges 1 mit einer ersten Bremsbeschleunigung a1 in einem ersten Zeitintervall T1 automatisch erzeugt werden. Insbesondere beginnt das erste Zeitintervall T1 zeitlich vor dem spätmöglichsten Zeitpunkt, bei der eine Kollision gerade noch vermieden werden kann, sodass eine Zeit eingeräumt werden kann, einen zweiteiligen Notbremsvorgang durchzuführen. Das Fahrzeug 1 wird folglich durch die erste Bremsbeschleunigung a1 im ersten Zeitintervall T1 gebremst, sodass die Relativgeschwindigkeit V zu dem Objekt 2 reduziert wird. Insbesondere kann die Relativgeschwindigkeit V erheblich reduziert werden, wenn die erste Bremsbeschleunigung a1 vorzugsweise einer maximalen Bremsbeschleunigung des Fahrzeuges 1 entspricht.

In einem optionalen fünften Schritt S5 kann ein Übergangsbremssignal erzeugt werden, welches die erste Bremsbeschleunigung a1 in die zweite Bremsbeschleunigung a2 in einem Übergangszeitintervall Tx zwischen dem ersten Zeitintervall T1 und dem zweiten Zeitintervall T2 kontinuierlich übergehen lässt.

In einem sechsten Schritt S6 kann mittels der Steuereinheit 5 des Systems 3 des Fahrzeuges 1 ein zweites Bremssignal zum Bremsen des Fahrzeuges 1 mit einer zweiten Bremsbeschleunigung a2 in einem, das erste Zeitintervall T1 anschließenden, zweiten Zeitintervall T2 am Ende des Notbremsvorganges automatisch erzeugt werden, wobei ein Betrag der zweiten Bremsbeschleunigung a2 gegenüber einem Betrag der ersten Bremsbeschleunigung a2 reduziert ist.

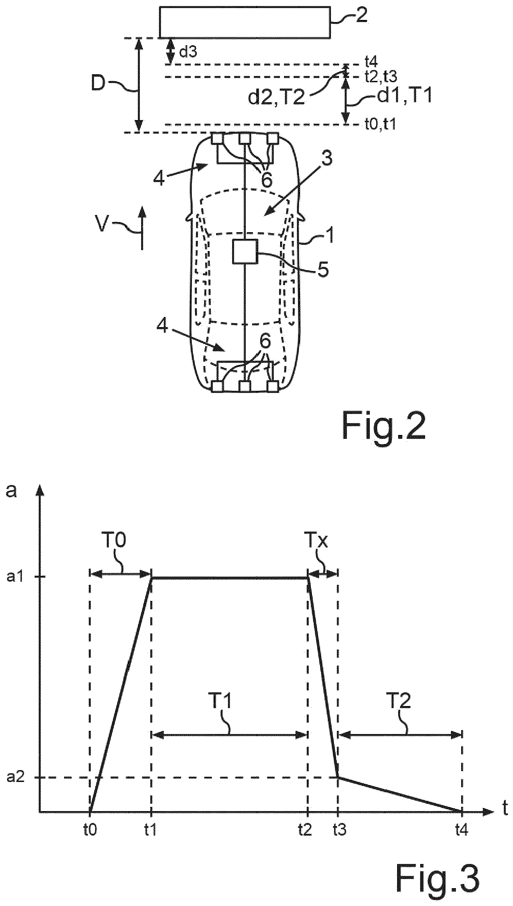

In der Fig. 2 ist eine schematische Darstellung eines Ausführungsbeispiels eines erfindungsgemäßen Fahrzeuges 1 mit einem erfindungsgemäßen System 3 und eines Objektes 3 gezeigt. In diesem Beispiel ist das Objekt 3 eine Wand, es kann sich jedoch auch um jedes weitere stehende oder bewegte Objekt 3 handeln, wie beispielsweise ein weiteres Fahrzeug, ein Radfahrer, ein Fußgänger, ein Baum oder dergleichen. Das Fahrzeug umfasst ein System 3, welches wiederum zumindest eine Steuereinheit 5 und eine Umfeldsensorvorrichtung 4 umfasst. Die Umfeldsensorvorrichtung 4 weist in diesem Beispiel sechs Ultraschall-Sensoren 6 auf, jeweils drei an einem vorderen Ende und an einem hinteren Ende des Fahrzeuges 1. Diese Anzahl ist beliebig gewählt. Die Umfeldsensorvorrichtung 4 kann insbesondere beliebig viele Ultraschall-Sensoren aufweisen. Auch ist es denkbar, dass lediglich das vordere Ende oder das hintere ende Ultraschall-Sensoren aufweist.

Zu dem gezeigten Zeitpunkt der Fig. 2 ist das Fahrzeug 1 mit dem Abstand D von dem Objekt 2 beabstandet, wobei sich das Fahrzeug 1 mit der Relativgeschwindigkeit V auf das Objekt 2 zubewegt. Die Relativgeschwindigkeit V kann beispielsweise einer Eigengeschwindigkeit des Fahrzeuges 1 entsprechen, wenn das Objekt 2 steht und sich das Fahrzeug 1 senkrecht auf das Objekt 2 zubewegt.

Basierend auf der Distanz D und der Relativgeschwindigkeit V kann beispielsweise eine Recheneinheit des Systems 3 eine potentielle Kollision des Fahrzeuges 1 mit dem Objekt 3 frühzeitig erkennen, sodass rechtzeitig der Notbremsvorgang gemäß des erfindungsgemäßen Verfahrens durchgeführt werden kann.

Beispielsweise kann das Fahrzeug 1 basierend auf dem ersten Bremssignal zum Startzeitpunkt t0, t1 mit der ersten Bremsbeschleunigung a1 in dem ersten Zeitintervall T1 gebremst werden, und kann in diesem Zeitintervall beispielsweise die Strecke d1 zurücklegen und noch eine Restrelativgeschwindigkeit aufweisen.

Im Anschluss kann das Fahrzeug 1 basierend auf dem zweiten Bremssignal zum Startzeitpunkt t2,t3 mit der zweiten Bremsbeschleunigung a2 in dem zweiten Zeitintervall T2 gebremst werden, und kann in diesem Zeitintervall beispielsweise die Strecke d2 zurücklegen und am Ende des Zeitintervalls zum Endzeitpunkt t4 zum Stillstand kommen. Beispielsweise weist das Fahrzeug 1 am Ende des Notbremsvorganges noch einen restlichen Abstand d3 zum Objekt 3 auf, sodass erfolgreich eine Kollision vermieden werden kann.

Fig. 3 zeigt ein Ausführungsbeispiel eines Zeit-Beschleunigungs-Diagramms eines erfindungsgemäßen Verfahrens, wobei an der Abszisse die Zeit t und an der Ordinate die Beschleunigung a aufgetragen ist. Insbesondere weist die Beschleunigung a negative Beschleunigungswerte auf, da es sich um Bremsbeschleunigungen handelt. Insbesondere ist die Beschleunigung a insbesondere mit der Einheit [- m/s²] angegeben.

Zu Beginn des Notbremsvorganges zum Startzeitpunkt t0 des Notbremsvorganges kann die erste Bremsbeschleunigung a1 basierend auf einem Startbremssignal kontinuierlich aufgebaut werden, insbesondere innerhalb des Startintervalls T0 bis zum Zeitpunkt t1, zu welchem die erste Bremsbeschleunigung a1 vorherrscht. Die Steigung des Graphen im Startintervall T0 ist in diesem Beispiel beliebig gewählt. Insbesondere kann die Steigung des Graphen im Startintervall T0 derart steil sein, dass der Startzeitpunkt t0 quasi dem Startzeitpunkt t1 entsprechen kann, sodass die erste Bremsbeschleunigung a1 quasi direkt zum Startzeitpunkt t0 des Notbremsvorganges anliegt.

Im gezeigten Beispiel kann das Fahrzeug 1 im ersten Zeitintervall T1 zwischen dem Startzeitpunkt t1 und den Endzeitpunkt t2 mit der ersten Bremsbeschleunigung a0 gebremst werden. Lediglich beispielhaft ist die Bremsbeschleunigung über dem ersten Zeitintervall T1 konstant. Vorzugsweise kann die erste Bremsbeschleunigung a1 einer maximalen Beschleunigung des Fahrzeuges 1 entsprechen.

In diesem Beispiel kann in einem Übergangszeitintervall Tx zwischen dem ersten Zeitintervall T1 und dem zweiten Zeitintervall T2, insbesondere zwischen dem Endzeitpunkt t2 des ersten Intervalls T1 und dem Startzeitpunkt t3 des zweiten Intervalls T2 die erste Bremsbeschleunigung a1 basierend auf einem Übergangsbremssignal in die zweite Bremsbeschleunigung a2 kontinuierlich überführt werden, wobei die zweite Bremsbeschleunigung a2 gegenüber der ersten Bremsbeschleunigung a1 reduziert ist. Die Steigung des Graphen im Übergangsintervall Tx ist in diesem Beispiel beliebig gewählt. Insbesondere kann die Steigung des Graphen im Übergangsintervall Tx derart steil sein, dass der Endzeitpunkt t2 quasi dem Startzeitpunkt t3 entsprechen kann, sodass die erste Bremsbeschleunigung a1 quasi abrupt in die zweite Bremsbeschleunigung a2 übergeht.

In dem zweiten Zeitintervall T2 kann das Fahrzeug 1 basierend auf dem zweiten Bremssignal mit der zweiten Bremsbeschleunigung a2 gebremst werden. Beispielsweise nimmt ein Betrag der Bremsbeschleunigung im zweiten Zeitintervall T2 kontinuierlich ab. An einem Endzeitpunkt t4 des zweiten Zeitintervalls und insbesondere am Ende des Notbremsvorganges beträgt der Wert der Bremsbeschleunigung 0. Vorzugsweise steht das Fahrzeug 1 zum Endzeitpunkt t4.

Durch die zumindest zwei Phasen des Notbremsvorganges kann die körperliche Belastung für einen Insassen des Fahrzeuges bei einem Notbremsvorgang deutlich reduziert werden. Gerade am Ende des Notbremsvorganges, bei welchem die Belastung für den Insassen, insbesondere im Nackenbereich, am größten ist, kann diese Belastung insbesondere durch die reduzierte, zweite Bremsbeschleunigung abgemildert werden. Insbesondere kann ein "Kopfnicken" des Insassen, welches vor allem durch einen starken Bremsvorgang bis zu einem Stillstand des Fahrzeuges zwangsweise hervorgerufen wird, abgemildert werden. Der Insasse empfindet somit vorteilhaft einen Notbremsvorgang mit den vorgeschlagenen Schritten zumindest als angenehmer gegenüber einem starken Bremsvorgang bis zum Stillstand des Fahrzeuges. Des Weiteren können die Komponenten einer Bremsvorrichtung des Fahrzeuges geschont werden, sodass ein Verschleiß der Komponenten reduziert werden kann.

Insgesamt zeigen die Beispiele, wie ein automatisierter Schutzbremsvorgang in zwei Stufen bereitgestellt werden kann. Mit Ultraschall-Sensoren können Objekte wie beispielsweise Autos, Lastwagen oder Wände auch frühzeitig erkannt werden und als Bremsziel ausgegeben werden. In diesen Fällen, wenn frühzeitig klar ist, dass eine Kollision bevorsteht, muss nicht auf den letzten Punkt gewartet werden, um eine Schutzbremsung auszulösen und um eine Kollision zu verhindern. In diesen Fällen wird frühzeitig eine Teilschutzbremsung ausgelöst, die am Ende die Bremskraft verringert um das Kopfnicken zu verhindern. Dabei soll es sich aber nicht um eine Komfortbremsung handeln.

## Patentansprüche

1. Verfahren zum Durchführen eines Notbremsvorganges eines fahrenden Fahrzeuges (1), umfassend die Schritte:
a) Bereitstellen einer Distanz (D) und einer Relativgeschwindigkeit (V) des Fahrzeuges (1) zu einem Objekt (2), mit welchem das Fahrzeug (1) potentiell kollidieren kann;
b) Automatisches Erzeugen eines ersten Bremssignals zum Bremsen des Fahrzeuges (1) mit einer ersten Bremsbeschleunigung (a1) in einem ersten Zeitintervall (T1), abhängig von der Distanz (D) und der Relativgeschwindigkeit (V);
c) Automatisches Erzeugen eines zweiten Bremssignals zum Bremsen des Fahrzeuges (1) mit einer zweiten Bremsbeschleunigung (a2) in einem, an das erste Zeitintervall (T1) anschließenden, zweiten Zeitintervall (T2) am Ende des Notbremsvorganges, wobei die zweite Bremsbeschleunigung (a2) gegenüber der ersten Bremsbeschleunigung (a1) reduziert ist.

2. Verfahren nach Anspruch 1,
**dadurch gekennzeichnet, dass**
die erste Bremsbeschleunigung (a1) basierend auf dem ersten Bremssignal einer maximalen Bremsbeschleunigung des Fahrzeuges (1) entspricht.

3. Verfahren nach Anspruch 1 oder 2,
**dadurch gekennzeichnet, dass**
die zweite Bremsbeschleunigung (a2) basierend auf dem zweiten Bremssignal in dem zweiten Zeitintervall (T2) kontinuierlich reduziert wird.

4. Verfahren nach einem der vorhergehenden Ansprüche,
**dadurch gekennzeichnet, dass**
ein Übergangsbremssignal erzeugt wird, welches die erste Bremsbeschleunigung (a1) in die zweite Bremsbeschleunigung (a2) in einem Übergangszeitintervall (Tx) zwischen dem ersten Zeitintervall (T1) und dem zweiten Zeitintervall (T2), insbesondere kontinuierlich, übergehen lässt.

5. Verfahren nach einem der vorhergehenden Ansprüche,
**dadurch gekennzeichnet, dass**
ein Startbremssignal zu Beginn des Notbremsvorganges erzeugt wird, welches die erste Bremsbeschleunigung (a1) in einem Zeitintervall (T0) kontinuierlich aufbauen lässt.

6. Verfahren nach einem der vorhergehenden Ansprüche,
**dadurch gekennzeichnet, dass**
das Verfahren lediglich in einem Parkmodus des Fahrzeuges (1) zum Durchführen eines Einparkens und/oder eines Ausparkens des Fahrzeuges (1) aktiviert ist, wobei das Fahrzeug (1) mit einer Geschwindigkeit von weniger als 20 km/h, insbesondere weniger als 10 km/h fährt.

7. System (3) zum Durchführen eines Notbremsvorganges eines fahrenden Fahrzeuges (1), das System (3) umfassend
- eine Umfeldsensorvorrichtung (4), welche dazu ausgebildet ist, eine Distanz (D) und eine Relativgeschwindigkeit (V) des Fahrzeuges (1) zu einem Objekt (2) bereitzustellen, mit welchem das Fahrzeug (1) potentiell kollidieren kann;
- eine Steuereinheit (5), welche dazu ausgebildet ist,
- abhängig von der Distanz (D) und der Relativgeschwindigkeit (V) ein erstes Bremssignal zum Bremsen des Fahrzeuges (1) mit einer ersten Bremsbeschleunigung (a1) in einem ersten Zeitintervall (T1) automatisch zu erzeugen, und
- ein zweites Bremssignal zum Bremsen des Fahrzeuges (1) mit einer zweiten Bremsbeschleunigung (a2) in einem, das erste Zeitintervall (T1) anschließenden, zweiten Zeitintervall (T2) am Ende des Notbremsvorganges automatisch zu erzeugen, wobei die zweite Bremsbeschleunigung (a2) gegenüber der ersten Bremsbeschleunigung (a2) reduziert ist.

8. System nach einem der vorhergehenden Ansprüche,
**dadurch gekennzeichnet, dass**
die Umfeldsensorvorrichtung (4) zumindest einen Ultraschall-Sensor (6) umfasst, welcher dazu ausgebildet ist, die Distanz (D) und die Relativgeschwindigkeit (V) des Fahrzeuges (1) zu dem Objekt (2) zu erfassen.

9. System (3) nach einem der vorhergehenden Ansprüche,
**dadurch gekennzeichnet, dass**
das System (3) lediglich in einem Parkmodus des Fahrzeuges (1) zum Einparken und/oder Ausparken des Fahrzeuges (1) aktiviert ist.

10. Fahrzeug (1), umfassend ein System (3) nach einem der Ansprüche 7 bis 9.
